# EUROPEAN PATENT APPLICATION

(11) **EP 4 358 440 A1**
(43) Date of publication of application: **24.04.2024**
(21) Application number: 22825218.5
(22) Date of filing: 09.06.2022
(51) Int. Cl.: H04B 17/318, H04B 17/336, H04B 7/0417, H04B 7/08, H04W 24/10

(54) **BEAM GAIN CORRECTION METHOD**

(30) Priority: 18.06.2021 KR 20210079235
(71) Applicant: LG Electronics Inc., Yeongdeungpo-gu Seoul 07336 (KR)
(72) Inventor: YANG, Yoonoh, Seoul 06772 (KR); LEE, Sangwook, Seoul 06772 (KR); LIM, Suhwan, Seoul 06772 (KR); HWANG, Jinyup, Seoul 06772 (KR); PARK, Jinwoong, Seoul 06772 (KR)
(74) Representative: Maikowski & Ninnemann Patentanwälte Partnerschaft mbB
(86) International application number: PCT/KR2022/008118
(87) International publication number: WO 2022/265293

(57) **Abstract**

A disclosure of the present specification provides a method for performing communication by a base station. The method comprises the steps of: transmitting a measurement configuration to a terminal; receiving first measurement information and second measurement information from the terminal, wherein the first measurement information includes i) a first measurement value measured by the terminal with respect to a serving cell, and ii) information on a first beam set used by the terminal with respect to the serving cell, and the second measurement information includes i) a second measurement value measured by the terminal with respect to a neighboring cell, and ii) information on a second beam set used by the terminal with respect to the neighboring cell; correcting the first measurement value on the basis of the information on the first beam set; and correcting the second measurement value on the basis of the information on the second beam set.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### TECHNICAL PROBLEM

Different beam gains caused by measurements using different beam sets are problematic.

### TECHNICAL SOLUTION

The base station may receive beam set information from the terminal and correct the measurement value based on this.

### ADVANTAGEOUS EFFECTS

The specification may have various effects.

For example, through the procedure disclosed in this specification, by correcting the beam gain for measurements using different beam sets, the network can efficiently manage the mobility of the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5a to 5c are exemplary diagrams illustrating an exemplary architecture for a service of next-generation mobile communication.
FIG. 6 shows an example of subframe types in NR.
FIG. 7 is an exemplary diagram illustrating an example of an SS block in NR.
FIG. 8 is an exemplary diagram illustrating an example of beam sweeping in NR.
FIG. 9 shows an example of performing measurements in DC for E-UTRAN and NR.
FIG. 10 shows an example of performing measurements in NR carrier aggregation.
FIG. 11 shows an example of measurement by different RX beam sets in FR2.
FIG. 12 shows the procedure of the base station according to the disclosure of the present specification.
FIG. 13 shows the procedure of the UE according to the disclosure of the present specification.

### BEST MODE

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

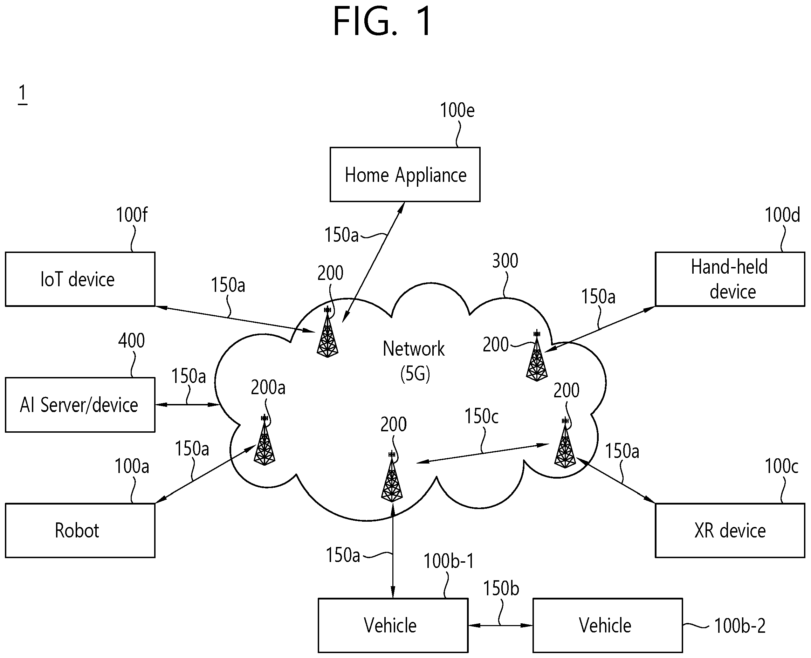

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). AUE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

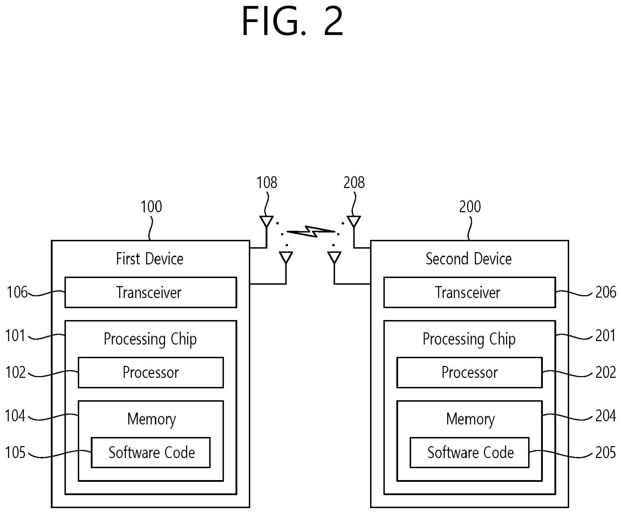

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

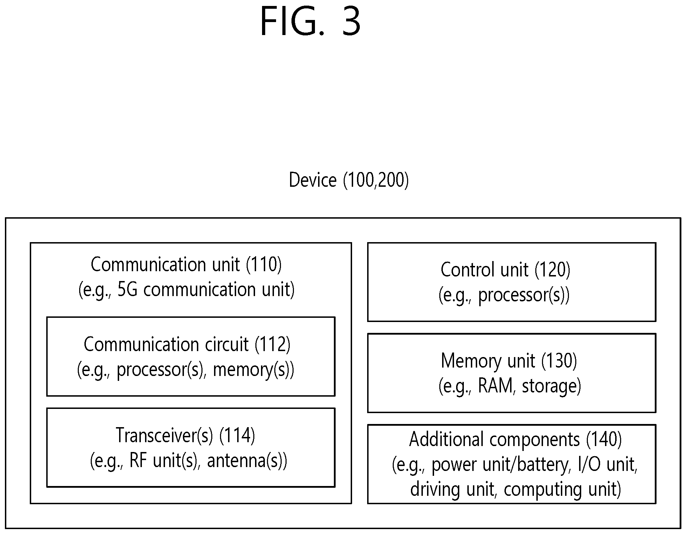

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

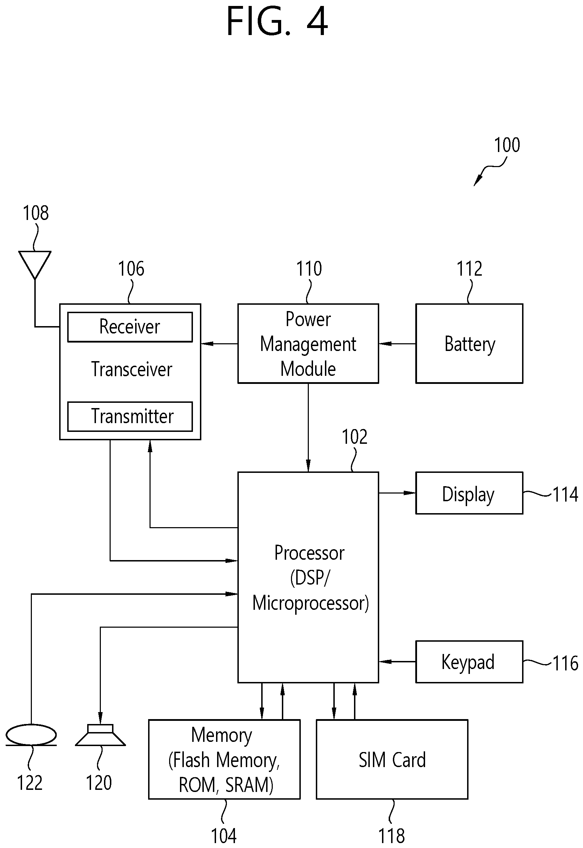

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

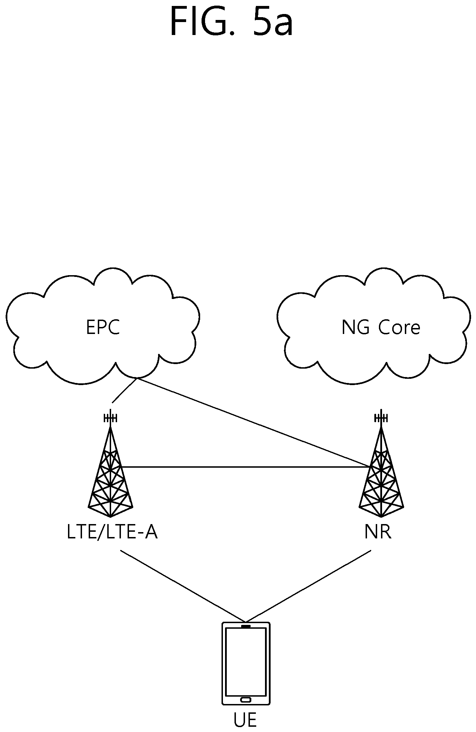

**FIGS. 5a to 5c** **are exemplary diagrams illustrating an exemplary architecture for a service of next-generation mobile communication.**

Referring to FIG. 5a, the UE is connected to the LTE/LTE-A-based cell and the NR-based cell in a DC (dual connectivity) manner.

The NR-based cell is connected to a core network for the existing 4G mobile communication, that is, the NR-based cell is connected an Evolved Packet Core (EPC).

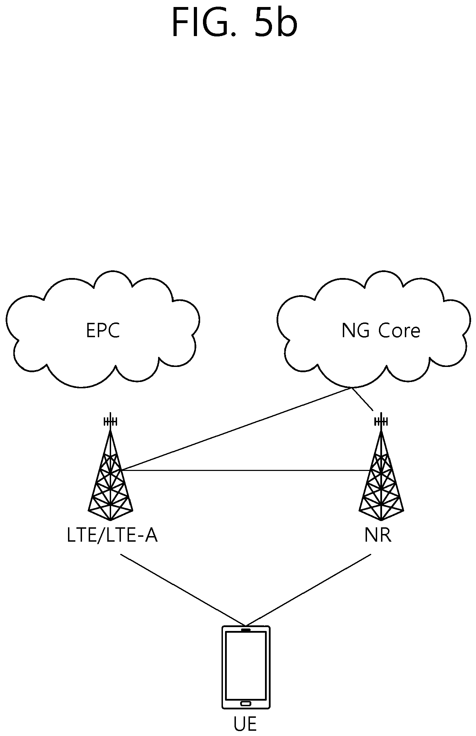

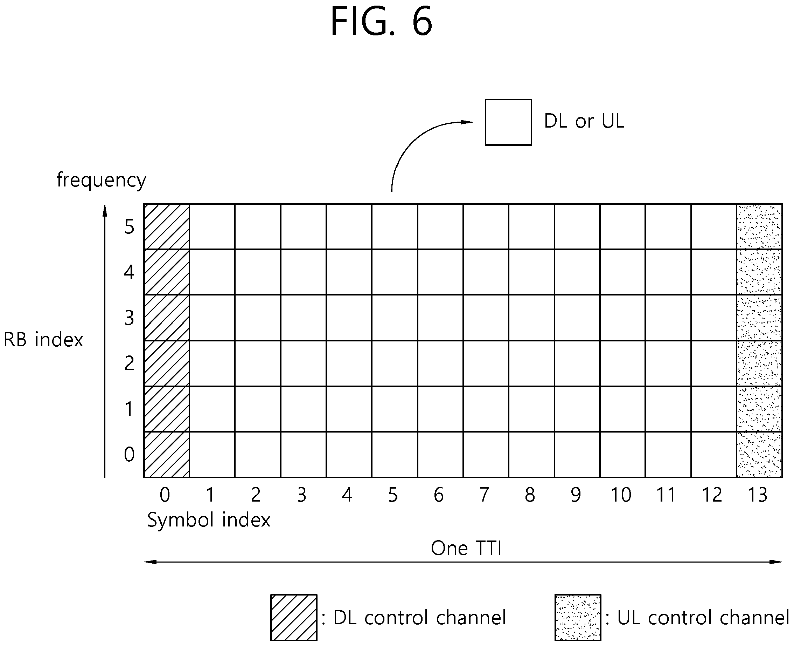

Referring to FIG. 5b, unlike FIG. 6a, an LTE/LTE-A-based cell is connected to a core network for 5G mobile communication, that is, the LTE/LTE-A-based cell is connected to a Next Generation (NG) core network.

A service method based on the architecture shown in FIG 5a and FIG 5b is referred to as NSA (non-standalone).

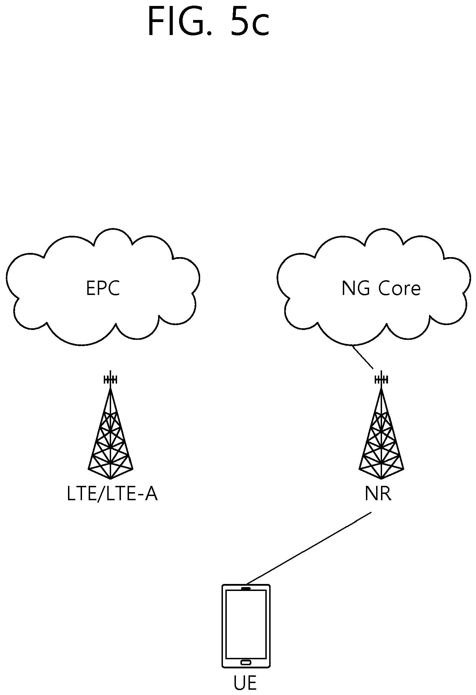

Referring to FIG. 5c, UE is connected only to an NR-based cell. A service method based on this architecture is called SA (standalone).

Meanwhile, in the NR, it may be considered that reception from a base station uses downlink subframe, and transmission to a base station uses uplink subframe. This method can be applied to paired and unpaired spectra. A pair of spectrum means that two carrier spectrums are included for downlink and uplink operation. For example, in a pair of spectrums, one carrier may include a downlink band and an uplink band that are paired with each other.

**FIG. 6** **shows an example of subframe types in NR.**

The TTI (transmission time interval) shown in FIG. 6 may be referred to as a subframe or a slot for NR (or new RAT). The subframe (or slot) of FIG. 6 may be used in a TDD system of NR (or new RAT) to minimize data transmission delay. As shown in FIG. 6, a subframe (or slot) includes 14 symbols, like the current subframe. The front symbol of the subframe (or slot) may be used for the DL control channel, and the rear symbol of the subframe (or slot) may be used for the UL control channel. The remaining symbols may be used for DL data transmission or UL data transmission. According to this subframe (or slot) structure, downlink transmission and uplink transmission may be sequentially performed in one subframe (or slot). Accordingly, downlink data may be received within a subframe (or slot), and uplink acknowledgment (ACK/NACK) may be transmitted within the subframe (or slot). The structure of such a subframe (or slot) may be referred to as a self-contained subframe (or slot). When the structure of such subframe (or slot) is used, the time it takes to retransmit data in which a reception error occurs is reduced, so that the final data transmission latency can be minimized. In such a self-contained subframe (or slot) structure, a time gap, from the transmission mode to the reception mode or from the reception mode to the transmission mode, may be required in a transition process. To this, some OFDM symbols when switching from DL to UL in the subframe structure may be set as a guard period (GP).

### <Support of Various Numerologies>

In the next generation system, with development of wireless communication technologies, a plurality of numerologies may be provided to a UE.

The numerologies may be defined by a length of cycle prefix (CP) and a subcarrier spacing. One cell may provide a plurality of numerology to a UE. When an index of a numerology is represented by µ, a subcarrier spacing and a corresponding CP length may be expressed as shown in the following table.

**[Table 3]**

| M | Δf=2µ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

In the case of a normal CP, when an index of a numerology is expressed by µ, the number of OLDM symbols per slot (N^{slot}_{symb}), the number of slots per frame (N^{frame,µ}ₛₗₒₜ), and the number of slots per subframe (N^{subframe,µ}ₛₗₒₜ) are expressed as shown in the following table.

**[Table 4]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In the case of an extended CP, when an index of a numerology is represented by µ, the number of OLDM symbols per slot (N^{slot}_{symb}), the number of slots per frame (N^{frame,µ}ₛₗₒₜ), and the number of slots per subframe (N^{subframe,µ}ₛₗₒₜ) are expressed as shown in the following table.

**[Table 5]**

| M | N^{slot}_{symb} | N^{frame,µ}ₛₗₒₜ | N^{subframe,µ}ₛₗₒₜ |
|---|---|---|---|
| 2 | 12 | 40 | 4 |

Meanwhile, in next-generation mobile communication, each symbol within a symbol may be used as a downlink or an uplink as shown in the table below. In the table below, uplink is denoted by U, and downlink is denoted by D. In the table below, X represents a symbol that can be flexibly used in uplink or downlink.

**[Table 6]**

| format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | X | X | X | X | X | X | X | X | X | X | X | X | X | X |
| 3 | D | D | D | D | D | D | D | D | D | D | D | D | D | X |
| 4 | D | D | D | D | D | D | D | D | D | D | D | D | X | X |
| 5 | D | D | D | D | D | D | D | D | D | D | D | X | X | X |
| 6 | D | D | D | D | D | D | D | D | D | D | X | X | X | X |
| 7 | D | D | D | D | D | D | D | D | D | X | X | X | X | X |
| 8 | X | X | X | X | X | X | X | X | X | X | X | X | X | U |
| 9 | X | X | X | X | X | X | X | X | X | X | X | X | U | U |
| 10 | X | U | U | U | U | U | U | U | U | U | U | U | U | U |
| 11 | X | X | U | U | U | U | U | U | U | U | U | U | U | U |
| 12 | X | X | X | U | U | U | U | U | U | U | U | U | U | U |
| 13 | X | X | X | X | U | U | U | U | U | U | U | U | U | U |
| 14 | X | X | X | X | X | U | U | U | U | U | U | U | U | U |
| 15 | X | X | X | X | X | X | U | U | U | U | U | U | U | U |
| 16 | D | X | X | X | X | X | X | X | X | X | X | X | X | X |
| 17 | D | D | X | X | X | X | X | X | X | X | X | X | X | X |
| 18 | D | D | D | X | X | X | X | X | X | X | X | X | X | X |
| 19 | D | X | X | X | X | X | X | X | X | X | X | X | X | U |
| 20 | D | D | X | X | X | X | X | X | X | X | X | X | X | U |
| 21 | D | D | D | X | X | X | X | X | X | X | X | X | X | U |
| 22 | D | X | X | X | X | X | X | X | X | X | X | X | U | U |
| 23 | D | D | X | X | X | X | X | X | X | X | X | X | U | U |
| 24 | D | D | D | X | X | X | X | X | X | X | X | X | U | U |
| 25 | D | X | X | X | X | X | X | X | X | X | X | U | U | U |
| 26 | D | D | X | X | X | X | X | X | X | X | X | U | U | U |
| 27 | D | D | D | X | X | X | X | X | X | X | X | U | U | U |
| 28 | D | D | D | D | D | D | D | D | D | D | D | D | X | U |
| 29 | D | D | D | D | D | D | D | D | D | D | D | X | X | U |
| 30 | D | D | D | D | D | D | D | D | D | D | X | X | X | U |
| 31 | D | D | D | D | D | D | D | D | D | D | D | X | U | U |
| 32 | D | D | D | D | D | D | D | D | D | D | X | X | U | U |
| 33 | D | D | D | D | D | D | D | D | D | X | X | X | U | U |
| 34 | D | X | U | U | U | U | U | U | U | U | U | U | U | U |
| 35 | D | D | X | U | U | U | U | U | U | U | U | U | U | U |
| 36 | D | D | D | X | U | U | U | U | U | U | U | U | U | U |
| 37 | D | X | X | U | U | U | U | U | U | U | U | U | U | U |
| 38 | D | D | X | X | U | U | U | U | U | U | U | U | U | U |
| 39 | D | D | D | X | X | U | U | U | U | U | U | U | U | U |
| 40 | D | X | X | X | U | U | U | U | U | U | U | U | U | U |
| 41 | D | D | X | X | X | U | U | U | U | U | U | U | U | U |
| 42 | D | D | D | X | X | X | U | U | U | U | U | U | U | U |
| 43 | D | D | D | D | D | D | D | D | D | X | X | X | X | U |
| 44 | D | D | D | D | D | D | X | X | X | X | X | X | U | U |
| 45 | D | D | D | D | D | D | X | X | U | U | U | U | U | U |
| 46 | D | D | D | D | D | D | X | D | D | D | D | D | D | X |
| 47 | D | D | D | D | D | X | X | D | D | D | D | D | X | X |
| 48 | D | D | X | X | X | X | X | D | D | X | X | X | X | X |
| 49 | D | X | X | X | X | X | X | D | X | X | X | X | X | X |
| 50 | X | U | U | U | U | U | U | X | U | U | U | U | U | U |
| 51 | X | X | U | U | U | U | U | X | X | U | U | U | U | U |
| 52 | X | X | X | U | U | U | U | X | X | X | U | U | U | U |
| 53 | X | X | X | X | U | U | U | X | X | X | X | U | U | U |
| 54 | D | D | D | D | D | X | U | D | D | D | D | D | X | U |
| 55 | D | D | X | U | U | U | U | D | D | X | U | U | U | U |
| 56 | D | X | U | U | U | U | U | D | X | U | U | U | U | U |
| 57 | D | D | D | D | X | X | U | D | D | D | D | X | X | U |
| 58 | D | D | X | X | U | U | U | D | D | X | X | U | U | U |
| 59 | D | X | X | U | U | U | U | D | X | X | U | U | U | U |
| 60 | D | X | X | X | X | X | U | D | X | X | X | X | X | U |
| 61 | D | D | X | X | X | X | U | D | D | X | X | X | X | U |

### <NR to SS block>

SS block (SS / PBCH block: SSB) include information necessary for the terminal to perform initial access in 5G NR, that is, a physical broadcast channel (PBCH) including a master information block (MIB) and a synchronization signal (Synchronization Signal: SS) (PSS and SSS).

In addition, a plurality of SSBs may be bundled to define an SS burst, and a plurality of SS bursts may be bundled to define an SS burst set. It is assumed that each SSB is beamformed in a specific direction, and several SSBs in the SS burst set are designed to support terminals existing in different directions, respectively.

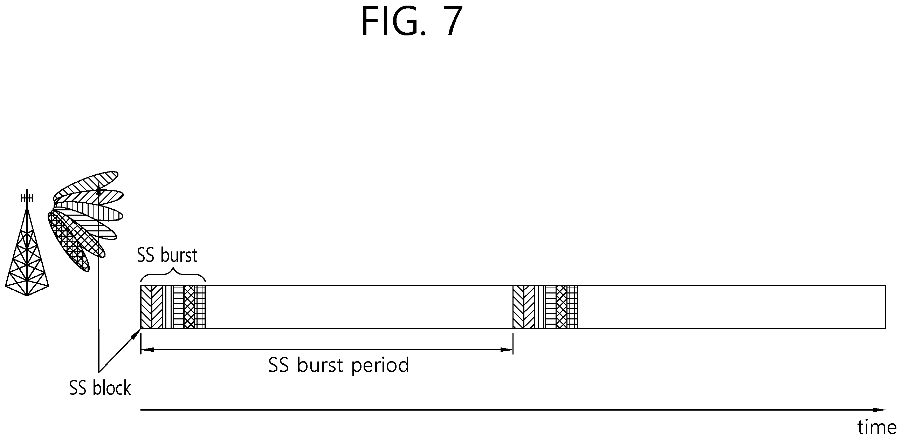

**FIG. 7** **is an exemplary diagram illustrating an example of an SS block in NR.**

Referring to FIG. 7, the SS burst is transmitted every predetermined period. Accordingly, the terminal receives the SS block, and performs cell detection and measurement.

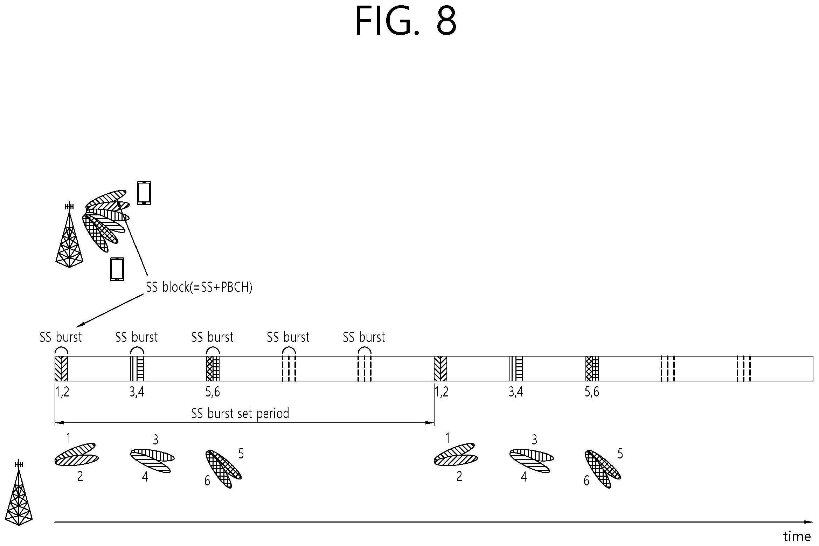

Meanwhile, in 5G NR, beam sweeping is performed for SS. This will be described with reference to FIG. 8.

**FIG. 8** **is an exemplary diagram illustrating an example of beam sweeping in NR.**

The base station transmits each SS block in the SS burst while performing beam sweeping according to time. In this case, several SS blocks in the SS burst set are transmitted to support terminals existing in different directions, respectively.

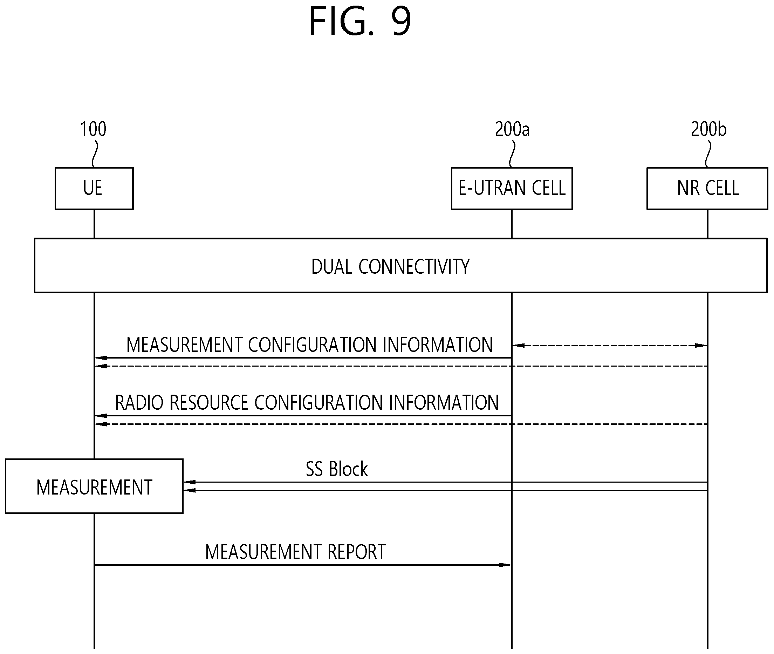

**FIG. 9** **shows an example of performing measurements in DC for E-UTRAN and NR.**

Referring to FIG. 9, UE 100 is connected to an E-UTRAN (i.e., LTE/LTE-A) cell by EN-DC. Here, the Pcell in EN-DC may be an E-UTRAN (i.e., LTE/LTE-A) cell, and the PSCell in EN-DC may be an NR cell.

UE 100 may receive a measurement configuration (or "measconfig") information element (IE) of an E-UTRAN (i.e., LTE/LTE-A) cell. The measurement configuration (or "measconfig") IE received from the E-UTRAN (i.e., LTE/LTE-A) cell may include the fields in Tables 7 to 9.

**[Table 7]**

| MeasConfig field description |
|---|
| fr1-Gap |
| This field exists when a UE is configured with EN-DC. This field indicates whether a gap is |
| applied to perform measurement on FR1 band. |
| mgta |
| It indicates whether to apply a timing advance (TA) of 0.5ms for a measurement gap configuration provided by the E-UTRAN. |

The measurement configuration (or "measconfig") IE may further include a measGapConfig field for setting the measurement gap (MG), as shown in Table 8. A gapoffset field within the measGapConfig field may further include gp4, gp5, ..., gp11 for EN-DC, in addition to the example shown in Table 9.

Meanwhile, the UE 100 may receive a measurement configuration ("measconfig") IE of an NR cell, which is a PSCell, directly from the NR cell or through the E-UTRAN cell which is a Pcell.

Meanwhile, the measurement configuration ("measconfig") IE of the NR cell may include fields as shown in the Table 8.

**[Table 8]**

| MeasConfig field description |
|---|
| measGapConfig |
| It indicates configuration or cancelation of a measurement gap |
| s-MeasureConfig |
| It indicates a threshold value for measurement of NR SpCell RSRP when a UE needs to perform measurement on a non-serving cell. |

The above measGapConfig may further include fields as shown in the table 9.

**[Table 9]**

| MeasGapConfig field description |
|---|
| gapFR2 |
| It indicates a measurement gap configuration applicable for FR2 frequency range. |
| gapOffset |
| It indicates a gap offset of a gap pattern with an MGRP. |
| mgl |
| It indicates a measurement gap length by ms. There may be 3ms, 4ms, 6ms, etc. |
| mgrp |
| It indicates a measurement gap repetition period by ms. |
| mgta |
| It indicates whether to apply a timing advance (TA) of 0,5ms for a measurement gap configuration. |

Meanwhile, the UE 100 receives a radio resource configuration information element (IE) of the E-UTRAN (that is, LTE/LTE-A) cell which is a Pcell. In addition, the UE may receive a radio resource configuration IE of an NR cell, which is a PSCell, from the NR cell or through the E-UTRAN cell which is a Pcell. The radio resource configuration IE includes subframe pattern information. The UE 100 performs measurement and reports a measurement result. Specifically, the UE 100 interrupts data transmission and reception with the E-UTRAN (that is, LTE/LTE-A) cell during the measurement gap, retunes its own RF chain, and performs measurement based on receipt of an SS block from an NR cell.

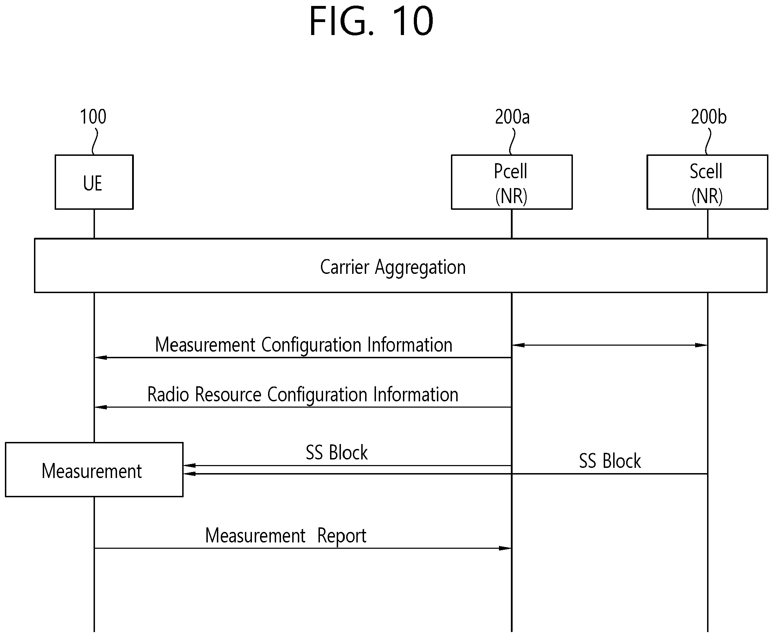

**FIG. 10** **shows an example of performing measurements in NR carrier aggregation.**

Referring to FIG. 10, the UE 100 is configured for carrier aggregation with a first cell (e.g., Pcell) and a second cell (e.g., Scell). Here, Pcell may be an NR-based cell, and Scell may be an NR-based cell.

UE 100 may receive a measurement configuration (or "measconfig") information element (IE). The measurement configuration (or "measconfig") IE may include the fields shown in table 7 to table 9.

The UE 100 receives a radio resource IE (Configuration Information Element).

The UE 100 performs measurements and reports the measurement results.

### <Cell Reselection>

The cell reselection procedure allows the UE to select a more suitable cell and camp on it.

When the UE is in either Camped Normally state or Camped on Any Cell state on a cell, the UE shall attempt to detect, synchronize, and monitor intra-frequency, inter-frequency and inter-RAT cells indicated by the serving cell. For intra-frequency and inter-frequency cells the serving cell may not provide explicit neighbor list but carrier frequency information and bandwidth information only. UE measurement activity may be controlled.

### 1. Requirements

### (1) UE measurement capability

For idle mode cell re-selection purposes, the UE shall be capable of monitoring at least:
- Intra-frequency carrier, and
- Depending on UE capability, 7 NR inter-frequency carriers, and
- Depending on UE capability, 7 FDD E-UTRA inter-RAT carriers, and
- Depending on UE capability, 7 TDD E-UTRA inter-RAT carriers.

In addition to the requirements defined above, a UE supporting E-UTRA measurements in RRC_IDLE state shall be capable of monitoring a total of at least 14 carrier frequency layers, which includes serving layer, comprising of any above defined combination of E-UTRA FDD, E-UTRA TDD and NR layers.

### (2) Measurement and evaluation of serving cells

The UE shall measure the SS-RSRP and SS-RSRQ level of the serving cell and evaluate the cell selection criterion S for the serving cell at least once every M1*N1 DRX cycle; where:
M1=2 if SMTC periodicity (TSMTC) > 20 ms and DRX cycle ≤ 0.64 second,
otherwise M1=1.

The UE shall filter the SS-RSRP and SS-RSRQ measurements of the serving cell using at least 2 measurements. Within the set of measurements used for the filtering, at least two measurements shall be spaced by, at least DRX cycle/2.

If the UE has evaluated according to Table 10 that the serving cell does not fulfil the cell selection criterion S, the UE shall initiate the measurements of all neighbor cells indicated by the serving cell, regardless of the measurement rules currently limiting UE measurement activities.

**[Table 10]**

| DRX cycle length [s] | | Scaling Factor (N1) | | Nₛₑᵣᵥ [number of DRX cycles] |
|---|---|---|---|---|
| | | FR1 | FR2^{Note1} | |
| 0.32 | | 1 | 8 | M1*N1*4 |
| 0.64 | | | 5 | M1*N1*4 |
| 1.28 | | | 4 | N1*2 |
| 2.56 | | | 3 | N1*2 |
| Note 1: | Applies for UE supporting power class 2&3&4. For UE supporting power class 1, N1 = 8 for all DRX cycle length. | | | |
| | | | | |

If the UE in RRC_IDLE has not found any new suitable cell based on searches and measurements using the intra-frequency, inter-frequency and inter-RAT information indicated in the system information for 10 s, the UE shall initiate cell selection procedures for the selected PLMN.

### <Beam forming measurement>

In the case of a UE capable of FR2 NR, measurement may be performed using Rx beamforming on a configured measurement target. Different Rx beam sets may be used for measurement of different targets. The different targets may be one associated with a serving cell and the other associated with a neighboring cell.

For SS-RSRQ measurements, the same RX beam shall be applied between RSSI measurements and RSRP measurements.

For CSI-RSRQ measurements, the same RX beam shall be applied between RSSI measurements and RSRP measurements.

It is up to the UE implementation how to select the RX beam set to perform RRM measurements on the carrier.

For measurements based on different measurement objects, different sets of RX beams may be used.

Based on the measurement object, the same set of RX beams shall be used in measurement of each TX beam.

The measurements to be reported may need to be greater than the average of the measurements based on each RX beam in the selected set. The measurements to be reported may need to be the best among the measurements based on each RX beam in the selected set. Other alternatives may not be precluded.

RAN1 may request RAN4 to consider the above in futher work.

### <Problems to be solved in the disclosure of this specification>

In the FR2 (Frequency Range 2: 24250MHz~71000MHz, FR2-1(or FR2.1): 24250MHz~52600MHz, FR2-2(or FR2.2): 52600MHz~71000MHz) band, When the terminal performs measurements for the serving cell and neighboring cells, different sets of beams may be used. Different beam sets are applied different beam gains. If each measurement value for the serving cell and neighboring cells is reported to the network without correction for beam gain, the measurements for the serving cell and neighboring cells become inaccurate. This may have a negative impact in terms of mobility operation/management.

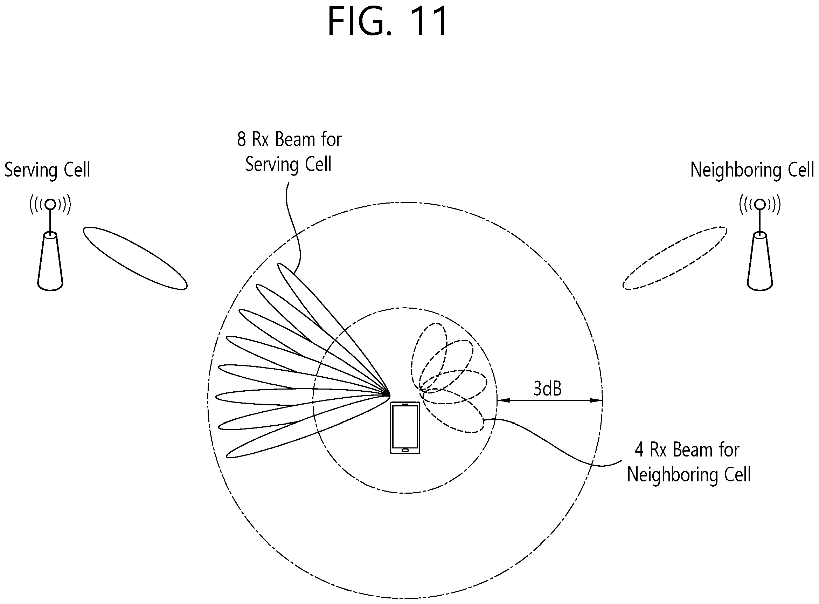

**FIG. 11** **shows an example of measurement by different RX beam sets in FR2.**

When different RX (receiver) beam sets are used for serving cell measurement and neighboring cell measurement, measurement values for each cell may differ depending on the RX beam gain difference. The UE is assumed to be located in the middle between two cells.

The number of reception beams in the serving cell may be 8, and the number of reception beams in the neighboring cell may be 4. The RSRP of the neighboring cell, as measured and reported, may be 3dB lower than that of the serving cell. It may be problematic for the network to decide to reselect cell based on the reported RSRP. In other words, RLF (Radio Link Failure) may occur abnormally.

Different sets of RX beams may be used for measurements based on different measurement objects.

When the UE uses a different RX beam set in measurement based on a different measurement object, the measured value is biased by the RX beamforming gain, and problems may occur if the network decides to change the cell based on this.

When the terminal measures cells in each measurement object (MO), information about which Rx beam set was used needs to be known to the network.

### <Disclosure of this specification>

The disclosures described later in this specification may be implemented in one or more combinations (e.g., a combination including at least one of the contents described below). Each of the drawings represents an embodiment of each disclosure, but the embodiments of the drawings may also be implemented in combination with each other.

The description of the method proposed in the disclosure of this specification may consist of a combination of one or more operations/configurations/steps described below. The methods described below can be performed or used in combination or complementary.

In the present specification, SSB-based RRM measurement is explained as an example, but RRM measurement based on other reference signals can be equally applied.

The following drawings were prepared to explain a specific example of the present specification. Since the names of specific devices or specific signals/messages/fields described in the drawings are provided as examples, the technical features of this specification are not limited to the specific names used in the drawings below.

### I. Different Rx beam sets

### 1. First disclosure

The terminal may inform the network of its RX beam set capability information. For example, MaxRxBeamSet, as RX beam set capability information, may be set to one of {1, 2, 4, 6, 8, 12, 16, 32, 48, 64}.

The terminal may inform the network of the RX Beam Set (RxBeamSet) information used for actual measurement for each MO. For example, RxBeamSet = {1, 2, 4, 6, 8, 12, 16, 32, 48, 64}, which may be less than or equal to MaxRxBeamSet.

The network may use the RX beam set information received from the terminal to calculate the difference from the RxBeamSet used in other cells based on the RxBeamSet used in the serving cell. Based on the calculated difference, the network may correct each cell measurement value reported from the terminal.

For example, when Cell 1 is a serving cell, the terminal may report the RSRP measurement value for Cell 1, the RSRP measurement value for Cell 2, and the used RxBeamSet to the network as follows.
- RSRP measurement value for cell 1= -60dBm, RxBeamSet= 8
- RSRP measurement value for cell 2= -60dBm, RxBeamSet= 4

The network may then correct RSRP as follows.
- Corrected RSRP measurement value for cell 1 = -60dBm
- Corrected RSRP measurement value for cell 2= -60dBm+10log10(8/4)= -57dBm

The network may use corrected RSRP measurement value.

The network may have the UE perform cell reselection using the corrected RSRP measurement value.

### 2. Second disclosure

The terminal may inform the network of its RX beam set capability information.

Using the RX beam set capability information, the network may specify the RX Beam Set (RxBeamSet) information that the terminal will use for actual measurement for each MO.

The terminal may measure cells in each MO using RX Beam Set (RxBeamSet) information received from the network.

The terminal may report the measured value to the network. As RX beam set capability information, MaxRxBeamSet may be set to one of {1, 2, 4, 6, 8, 12, 16, 32, 48, 64}.

For example, if the terminal notifies the network that MaxRxBeamSet = 8, the network may set the RxBeamSet of MO1 to 8 and the RxBeamSet of MO2 to 4 to the terminal. Here, cell 1 corresponds to the serving cell and MO1, and cell 2 corresponds to MO2. The terminal may report the RSRP measurement values for cell 1 and RSRP measurement values for cell 2 to the network as follows.
- RSRP measurement value for cell 1= -60dBm
- RSRP measurement value for cell 2= -60dBm

The network may correct RSRP as follows.
- Corrected RSRP measurement value for cell 1 = -60dBm
- Corrected RSRP measurement value for cell 2 = -60dBm + 10log10(8/4) = -57dBm

The network may use corrected RSRP measurement value.

The network may have the UE perform cell reselection using the corrected RSRP measurement value.

### 3. Third disclosure

When the terminal reports cell measurement value in each MO to the network, based on the RX beam set used in the serving cell, the terminal may correct the difference between the RX beam sets used in other cells and report it to the network.

For example, the terminal may measure cell 1 with RxBeamSet = 8, measure cell 2 with RxBeamSet = 4 (here, cell 1 corresponds to the serving cell and MO1, and cell 2 corresponds to MO2), and the RSRP measurement values for cell 1 and RSRP measurement values for cell may be as follows.
- RSRP measurement value for cell 1= -60dBm
- RSRP measurement value for cell 2= -60dBm

The terminal may correct RSRP as follows.
- Corrected RSRP measurement value for cell 1 = -60dBm
- Corrected RSRP measurement value for cell 2= -60dBm+10log10(8/4)= -57dBm

The terminal may correct the measurement value as above and report the corrected measurement value to the network.

The network may use the corrected RSRP measurements.

The network may have the UE perform cell reselection using the corrected RSRP measurement value.

In the above-described first, second, and third disclosures, when reporting a measurement value to the network, the terminal may inform the network of correction information on whether the terminal corrected the influence by the RxbeamSet used in each MO or not.(e.g., 'RxBeamSetCompensated' = 1 (corrected), 0 (not corrected))

In the first and second disclosures,
- If there is no correction information, the network may assume that the terminal used a different RxBeamSet and the first disclosure and the second disclosure may be applied.
- If there is correction information and the correction information is information that correction was not performed in the terminal, the first disclosure and the second disclosure may be applied.
- If there is correction information and the correction information is information that correction was performed in the terminal, the network may use the reported measurement value without additional correction.

In the third disclosure,
- If there is no correction information, the network may assume that the terminal used a different RxBeamSet, and the network may decide whether to perform correction on the reported measurement value. The network may use the reported measurements if it decides not to perform correction, or the network may correct reported measurements and use it if the network decides to perform correction.
- If there is correction information, the terminal shall send information that it has been corrected, and the network may use the reported measurement value without additional correction.

The above cell measurements may be RSRP, RSRQ, L1-RSRP, L1-RSRQ, PRS-RSRP, RSSI, and SINR.

### <Signaling information>

IE UE-NR-Capability may be used to convey NR UE Radio Access Capability Parameters.

Signaling of the UE-NR-Capability information element may be as shown in Table 11.

**[Table 11]**

| | | | |
|---|---|---|---|
| UE-NR-Capability | MaxRxBearnSet | ENUMERATED {1, 2, 4, 6, 8, 12, 16, 32, 48, 64} | OPTIONAL |

IE MeasObjectNR may specify information applicable to SS/PBCH block(s) intra/inter-frequency measurement and/or CSI-RS intra/inter-frequency measurement. Signaling of the MeasObjectNR information element may be as shown in Table 12.

**[Table 12]**

| | | | | |
|---|---|---|---|---|
| Meas Object NR | ssbFrequency | ARFCN-ValueNR | OPTIONAL | Cond SSBorAssociatedSSB |
| | ssbSubcarrierS pacing | SubcarrierSpaci ng | OPTIONAL | Cond SSBorAssociatedSSB |
| | smtc1 | SSB-MTC | OPTIONAL | Cond SSBorAssociatedSSB |
| | smtc2 | SSB-MTC2 | OPTIONAL | Cond SSBorAssociatedSSB |
| | refFreqCSI-RS | ARFCN-ValueNR | OPTIONAL | Cond CSI-RS |
| | reference Signal Config | Reference Signal Config | | |
| | absThreshSS-BlocksConsolid ation | ThresholdNR | OPTIONAL | Need R |
| | absThreshCSI-RS-Consolidation | ThresholdNR | OPTIONAL | Need R |
| | nrofS S-BlocksToAvera ge | INTEGER (2..maxNrofSS-BlocksToAverag e) | OPTIONAL | Need R |
| | nrofCSI-RS-ResourcesToAv erage | INTEGER (2..maxNrofCSI-RS-ResourcesToAve rage) | OPTIONAL | Need R |
| | quantityConfigI ndex | INTEGER (1..maxNrofQua ntityConfig) | | |
| | offsetMO | Q-OffsetRangeList | | |
| | cellsToRemove List | PCI-List | OPTIONAL | Need R |
| | cellsToAddMo dList | CellsToAddMod List | OPTIONAL | Need R |
| | blackCellsToRe moveList | PCI-RangeIndexLi st | OPTIONAL | Need R |
| | blackCellsToA ddModList | SEQUENCE (SIZE (1..maxNrofPCI-Ranges)) OF | OPTIONAL | Need R |
| | | PCI-RangeElement | | |
| | whiteCellsToR emoveList | PCI-RangeIndexLi st | OPTIONAL | Need R |
| | whiteCellsToA ddModList | SEQUENCE (SIZE (1..maxNrofPCI-Ranges)) OF PCI-RangeElement | OPTIONAL | Need R |
| | freqBandIndica torNR | FreqBandIndicat orNR | OPTIONAL | Need R |
| | measCycleSCel l | ENUMERATED {sf160, sf256, sf320, sf512, sf640, sf1024, sf1280} | OPTIONAL | Need R |
| | smtc3list-r16 | SSB-MTC3List-r16 | OPTIONAL | Need R |
| | rmtc-Config-r16 | SetupRelease {RMTC-Config-r16} | OPTIONAL | Need R |
| | t312-r16 | SetupRelease { T312-r16 } | OPTIONAL | Need M |
| | RxBeamSet | ENUMERATED {1, 2, 4, 6, 8, 12, 16, 32, 48, 64} | OPTIONAL | |

IE MeasResults may be about measurement results for intra-frequency, inter-frequency, inter-RAT mobility, and measurement results for sidelinks. Signaling of the MeasResults information element may be as shown in Table 13.

**[Table 13]**

| | | | | | |
|---|---|---|---|---|---|
| MeasRe sults | measId | MeasId | | | |
| | measResultServing MOList | MeasResultSer vMOList | | | |
| | measResultNeighC | measResultLi st | MeasResult | | OPTIONAL |
| | ells | NR | ListNR | | |
| | | easResultListE UTRA | MeasResult ListEUTRA | | |
| | | measResultList UTRA-FDD-r16 | MeasResult ListUTRA-FDD-r16 | | |
| | measResultServFre qListEUTRA-SCG | MeasResultSer vFreqListEUT RA-SCG | | | OPTIONAL |
| | measResultServFre qListNR-SCG | MeasResultSer vFreqListNR-SCG | | | OPTIONAL |
| | measResultSFTD-EUTRA | MeasResultSF TD-EUTRA | | | OPTIONAL |
| | measResultSFTD-NR | MeasResultCel lSFTD-NR | | | OPTIONAL |
| | measResultCellList SFTD-NR | MeasResultCel lListSFTD-NR | | | OPTIONAL |
| | measResultForRSS I-r16 | MeasResultFor RSSI-r16 | | | OPTIONAL |
| | locationInfo-r16 | LocationInfo-r16 | | | OPTIONAL |
| | ul-PDCP-DelayValueResultL ist-r16 | UL-PDCP-DelayValueRes ultList-r16 | | | OPTIONAL |
| | measResultsSL-r16 | MeasResultsSL -r 16 | | | OPTIONAL |
| | measResultCLI-r16 | MeasResultCL I-r16 | | | OPTIONAL |
| MeasRe sultServ MOList | SEQUENCE (SIZE (1..maxNrofServing Cells)) OF MeasResultServM O | | | | |
| MeasRe sultServ MO | servCellId | ServCellIndex | | | |
| | measResultServing Cell | MeasResultNR | | | |
| | measResultBestNei ghCell | MeasResultNR | | | OPTIONAL |
| MeasRe sultList NR | SEQUENCE (SIZE (1.. maxCellReport) OF MeasResultNR | | | | |
| MeasRe sultNR | physCellId | PhysCellId | | | OPTIONAL |
| | measResult | cellResults | resultsSSB-Cell | MeasQu antityRe sults | OPTIONAL |
| | | | resultsCSI-RS-Cell | MeasQu antityRe sults | OPTIONAL |
| | | | RxBeamSet | ENUME RATED {1, 2, 4, 6, 8, 12, 16, 32, 48, 64} | OPTIONAL |
| | | | RxBeamSet Compensate d | ENUME RATED {true, false} | OPTIONAL |
| | | rsIndexResults | resultsSSB-Indexes | ResultsP erSSB-IndexLis t | OPTIONAL |
| | | | resultsCSI-RS-Indexes | ResultsP erCSI-RS-IndexLis t | OPTIONAL |
| | cgi-Info | CGI-InfoNR | | | OPTIONAL |
| MeasQu antityRe suits | Rsrp | RSRP-Range | | | OPTIONAL |
| | rsrq | RSRQ-Range | | | OPTIONAL |
| | sinr | SINR-Range | | | OPTIONAL |

Additionally, the terminal may perform antenna scaling down to save power in a specific environment. For example, while operating 8 antenna elements ({a0, a1, a2, a3, a4, a5, a6, a7}), in certain environments, 4 antenna elements ({a0, a2, a4, a6} or {a0, a1, a2, a3}) may be operated (at this time, {a1, a3, a5, a7} or {a4, a5, a6, a7} is powered off). The cell measurement value may vary depending on the number of antenna elements actually operated. This is because the Rx beam gain varies. If measurement is performed by applying antenna scaling differently depending on the MO, the same problem may occur as when using a different Rx beam set described above.

### II. Antenna scale down

### 1. Fourth disclosure

The terminal may inform the network of antenna scale down information actually used for measurement in each MO. For example, antenna scale down may be one value among {0, -3, -6, -9, 112} dB.

For example, Cell 1 is a serving cell, and RSRP measurement value for Cell 1, RSRP measurement value for Cell 2, and the number of antenna elements used may be as follows.
- RSRP measurement value for cell 1 = -60dBm, number of antenna elements = 8 (corresponds to antenna scale = 0dB)
- RSRP measurement value for cell 2 = -60dBm, number of antenna elements = 4 (antenna scale = -3dB)

The terminal may report the above information to the network. The network may then correct RSRP measurement value as follows:
- Corrected RSRP measurement value for cell 1= -60dBm -(0)= -60dBm
- Corrected RSRP measurement value for cell 2= -60dBm-(-3)= -57dBm

The network may use the corrected RSRP measurement value.

The network may have the UE perform cell reselection using the corrected RSRP measurement value.

### 2. Fifth disclosure

The network may specify antenna scale information to be used by the UE for each MO. Then, the terminal may measure the cells in each MO using antenna scale information and report the measured value to the network.

For example, the network may set the antenna scale of MO1 to {0}dB and the antenna scale of MO2 to {-3 }dB. Here, cell 1 corresponds to the serving cell and MO 1, and cell 2 corresponds to MO2. The terminal may report the RSRP measurement value for cell 1 and the RSRP measurement value for cell 2 to the network as follows.
- RSRP measurement value for cell 1 = -60dBm, number of antenna elements = 8 (corresponds to antenna scale = 0dB)
- RSRP measurement value for cell 2 = -60dBm, number of antenna elements = 4 (antenna scale = -3dB)

The network may correct RSRP measurement value using the antenna scale value as follows.
- Corrected RSRP measurement value for cell 1= -60dBm-(0)= -60dBm
- Corrected RSRP measurement value for cell 2= -60dBm-(-3)= -57dBm

The network may use the corrected RSRP measurement value.

The network may have the UE perform cell reselection using the corrected RSRP measurement value.

### 3. Sixth disclosure

When the terminal reports the cell measurement value in each MO to the network, the terminal may correct the difference with the antenna scale value used in other cells based on the antenna scale value used in the serving cell, and the terminal may report to the network.

For example, the terminal may measure cell 1 with 8 antenna elements, and measure cell 2 with 4 antenna elements. Here, Cell 1 may correspond to the serving cell and MO1, and Cell 2 may correspond to MO2. Measurement value may be:
- RSRP measurement value for cell 1= -60dBm
- RSRP measurement value for cell 2= -60dBm

The terminal may correct RSRP measurement value using the antenna scale value as follows.
- Corrected RSRP measurement value for cell 1= -60dBm+0= -60dBm
- Corrected RSRP measurement value for cell 2= -60dBm-(-3)= -57dBm

The network may use the corrected RSRP measurement value.

The network may have the UE perform cell reselection using the corrected RSRP measurement value.

In the fourth, fifth, and sixth disclosures, when reporting a measurement value to the network, the terminal provides, to the network, information about whether the influence of the antenna scale used in each MO has been corrected or not. (For example, 'AntennaScaleCompensated' = 1 (corrected), 0 (not corrected))

The first-third disclosures and the fourth-sixth disclosures may be performed in combination. For example, the first disclosure and fourth disclosure may be performed together. That is, the measured value may be corrected using RxBeamSet and antenna scale information.

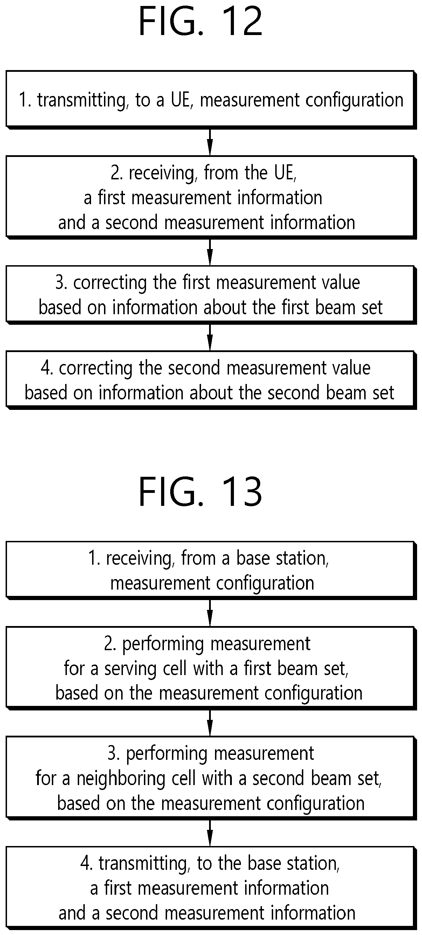

**FIG. 12** **shows the procedure of the base station according to the disclosure of the present specification.**
1. The base station may transmit, to a UE (User Equipment), measurement configuration.
2. The base station may receive, from the UE, a first measurement information and a second measurement information.

The first measurement information may include i) a first measurement value measured by the UE for a serving cell and ii) information about a first beam set used by the UE for the serving cell.

The second measurement information may include i) a second measurement value measured by the UE for a neighboring cell and ii) information about a second beam set used by the UE for the neighboring cell.
3. The base station may correct the first measurement value based on information about the first beam set.
4. The base station may correct the second measurement value based on information about the second beam set.

The first measurement information may further includes a first correction information that the first measurement value is a value corrected by the UE based on the first beam set.

The second measurement information may further includes a second correction information that the second measurement value is a value corrected by the UE based on the second beam set.

Based on the first correction information, the step of correcting the first measurement value may be not performed,

Based on the second correction information, the step of correcting the second measurement value may be not performed,

The base station may set, to the UE, beam set information to be used for measurement of the serving cell and the neighboring cell.

The first measurement value may be RSRP (Reference Signals Received Power) measured by the UE for the serving cell.

The second measurement value may be RSRP measured by the UE for the neighboring cell.

The information about the first beam set may be one of 1, 2, 4, 6, 8, 12, 16, 32, 48, and 64,

The information about the second beam set may be one of 1, 2, 4, 6, 8, 12, 16, 32, 48, and 64.

The base station may determine cell reselection for the neighboring cell, based on the corrected first measurement value and the corrected second measurement value.

**FIG. 13** **shows the procedure of the UE according to the disclosure of the present specification.**
1. The UE may receive, from a base station, measurement configuration.
2. The UE may perform measurement for a serving cell with a first beam set, based on the measurement configuration.
3. The UE may perform measurement for a neighboring cell with a second beam set, based on the measurement configuration.
5. The UE may transmit, to the base station, a first measurement information and a second measurement information.

The first measurement information may include i) a first measurement value measured by the UE for the serving cell and ii) information about the first beam.

The second measurement information may include i) a second measurement value measured by the UE for the neighboring cell and ii) information about the second beam set.

The UE may correct value measured by the UE for the serving cell to the first measurement value, based on information about the first beam set.

The UE may correct value measured by the UE for the neighboring cell to the second measurement value, based on information about the second beam set.

The first measurement information may further include a first correction information that the first measurement value is a value corrected by the UE based on the first beam set.

The second measurement information may further include a second correction information that the second measurement value is a value corrected by the UE based on the second beam set.

The UE may receive, from the base station, beam set information to be used for measurement for the serving cell and the neighboring cell.

The first measurement value may be RSRP (Reference Signals Received Power) measured by the UE for the serving cell.

The second measurement value may be RSRP measured by the UE for the neighboring cell.

The information about the first beam set may be one of 1, 2, 4, 6, 8, 12, 16, 32, 48, and 64.

The information about the second beam set may be one of 1, 2, 4, 6, 8, 12, 16, 32, 48, and 64.

The UE may receive, from the base station, an instruction to perform cell reselection.

Hereinafter, a device for providing mobile communication according to some embodiments of the present specification will be described.

For example, the device may include a processor, transceiver, and memory.

For example, a processor may be configured to be operably coupled with a memory and the processor.

The processor performs operation, which is comprising: receiving, from a base station, measurement configuration; performing measurement for a serving cell with a first beam set, based on the measurement configuration; performing measurement for a neighboring cell with a second beam set, based on the measurement configuration; transmitting, to the base station, a first measurement information and a second measurement information, wherein the first measurement information includes i) a first measurement value measured by the UE for the serving cell and ii) information about the first beam, wherein the second measurement information includes i) a second measurement value measured by the UE for the neighboring cell and ii) information about the second beam set.

Hereinafter, a processor for providing wireless communication service according to some embodiments of the present specification will be described.

The processor performs operation, which is comprising: receiving, from a base station, measurement configuration; performing measurement for a serving cell with a first beam set, based on the measurement configuration; performing measurement for a neighboring cell with a second beam set, based on the measurement configuration; transmitting, to the base station, a first measurement information and a second measurement information, wherein the first measurement information includes i) a first measurement value measured by the UE for the serving cell and ii) information about the first beam, wherein the second measurement information includes i) a second measurement value measured by the UE for the neighboring cell and ii) information about the second beam set.

Hereinafter, a non-volatile computer-readable medium storing one or more instructions for providing mobile communication m according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random-access memory (SDRAM), read-only memory (ROM), or non-volatile random-access memory (NVRAM). Read-only memory (EEPROM), flash memory, magnetic or optical data storage media, or other media that can be used to store instructions or data structures. Non-volatile computer readable media may also include combinations of the above.

Further, the methods described herein may be realized at least in part by computer-readable communication media that carry or carry code in the form of instructions or data structures, and which can be accessed, read, and/or executed by a computer.

According to some embodiments of the present disclosure, a non-transitory computer-readable medium has one or more instructions stored thereon. The stored one or more instructions may be executed by a processor of the UE.

The stored one or more instructions cause the processor to perform operation, which is comprising: receiving, from a base station, measurement configuration; performing measurement for a serving cell with a first beam set, based on the measurement configuration; performing measurement for a neighboring cell with a second beam set, based on the measurement configuration; transmitting, to the base station, a first measurement information and a second measurement information, wherein the first measurement information includes i) a first measurement value measured by the UE for the serving cell and ii) information about the first beam, wherein the second measurement information includes i) a second measurement value measured by the UE for the neighboring cell and ii) information about the second beam set.

The specification may have various effects.

For example, through the procedure disclosed in this specification, by correcting the beam gain for measurements using different beam sets, the network can efficiently manage the mobility of the terminal.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical feature of the method claims of the present specification may be combined and implemented as an apparatus, and the technical features of the apparatus claims of the present specification may be combined and implemented as a method. In addition, the technical feature of the method claims of the present specification and the technical features of the apparatus claims may be combined to be implemented as an apparatus, and the technical feature of the method claims and the technical features of the apparatus claims of the present specification may be combined and implemented as a method. Other implementations are within the scope of the following claims.

## Claims

1. A method for performing communication, performed by a base station, comprising:
transmitting, to a User Equipment, UE, measurement configuration;
receiving, from the UE, a first measurement information and a second measurement information,
wherein the first measurement information includes i) a first measurement value measured by the UE for a serving cell and ii) information about a first beam set used by the UE for the serving cell,
wherein the second measurement information includes i) a second measurement value measured by the UE for a neighboring cell and ii) information about a second beam set used by the UE for the neighboring cell;
correcting the first measurement value based on information about the first beam set; and
correcting the second measurement value based on information about the second beam set.

2. The method of claim 1,
wherein the first measurement information further includes a first correction information that the first measurement value is a value corrected by the UE based on the first beam set,
wherein the second measurement information further includes a second correction information that the second measurement value is a value corrected by the UE based on the second beam set,
wherein, based on the first correction information, the step of correcting the first measurement value is not performed,
wherein, based on the second correction information, the step of correcting the second measurement value is not performed,

3. The method of claim 1, further comprising:
setting, to the UE, beam set information to be used for measurement of the serving cell and the neighboring cell.

4. The method of claim 3,
wherein the first measurement value is Reference Signals Received Power, RSRP, measured by the UE for the serving cell,
wherein the second measurement value is RSRP measured by the UE for the neighboring cell.

5. The method of claim 1,
wherein the information about the first beam set is one of 1, 2, 4, 6, 8, 12, 16, 32, 48, and 64,
wherein the information about the second beam set is one of 1, 2, 4, 6, 8, 12, 16, 32, 48, and 64.

6. The method of claim 1, further comprising:
determining cell reselection for the neighboring cell, based on the corrected first measurement value and the corrected second measurement value.

7. A method for performing communication, performed by a User Equipment, UE, comprising:
receiving, from a base station, measurement configuration;
performing measurement for a serving cell with a first beam set, based on the measurement configuration;
performing measurement for a neighboring cell with a second beam set, based on the measurement configuration;
transmitting, to the base station, a first measurement information and a second measurement information,
wherein the first measurement information includes i) a first measurement value measured by the UE for the serving cell and ii) information about the first beam,
wherein the second measurement information includes i) a second measurement value measured by the UE for the neighboring cell and ii) information about the second beam set.

8. The method of claim 7, further comprising:
correcting value measured by the UE for the serving cell to the first measurement value, based on information about the first beam set; and
correcting value measured by the UE for the neighboring cell to the second measurement value, based on information about the second beam set,
wherein the first measurement information further includes a first correction information that the first measurement value is a value corrected by the UE based on the first beam set,
wherein the second measurement information further includes a second correction information that the second measurement value is a value corrected by the UE based on the second beam set.

9. The method of claim 7, further comprising:
receiving, from the base station, beam set information to be used for measurement for the serving cell and the neighboring cell.

10. The method of claim 7,
wherein the first measurement value is Reference Signals Received Power, RSRP, measured by the UE for the serving cell,
wherein the second measurement value is RSRP measured by the UE for the neighboring cell.

11. The method of claim 7,
wherein the information about the first beam set is one of 1, 2, 4, 6, 8, 12, 16, 32, 48, and 64,
wherein the information about the second beam set is one of 1, 2, 4, 6, 8, 12, 16, 32, 48, and 64.

12. The method of claim 7, further comprising:
receiving, from the base station, an instruction to perform cell reselection.

13. A User Equipment, UE, to perform communication, comprising:
a transceiver; and
a processor,
wherein the processor performs operation comprising:
performing measurement for a serving cell with a first beam set;
performing measurement for a neighboring cell with a second beam set;
transmitting, to the base station, a first measurement information and a second measurement information,
wherein the first measurement information includes i) a first measurement value measured by the UE for the serving cell and ii) information about the first beam,
wherein the second measurement information includes i) a second measurement value measured by the UE for the neighboring cell and ii) information about the second beam set.

14. An apparatus in mobile communication, comprising:
at least one processor; and
at least one memory storing instructions and operably electrically connectable with the at least one processor, based on the instructions being operated by the at least one processor, performed operation comprising:
receiving, from a base station, measurement configuration;
performing measurement for a serving cell with a first beam set, based on the measurement configuration;
performing measurement for a neighboring cell with a second beam set, based on the measurement configuration;
transmitting, to the base station, a first measurement information and a second measurement information,
wherein the first measurement information includes i) a first measurement value measured by the apparatus for the serving cell and ii) information about the first beam,
wherein the second measurement information includes i) a second measurement value measured by the apparatus for the neighboring cell and ii) information about the second beam set.

15. A non-volatile computer readable storage medium having recorded instructions,
wherein the instructions, based on being executed by one or more processors, cause the one or more processors to:
receiving, from a base station, measurement configuration;
performing measurement for a serving cell with a first beam set, based on the measurement configuration;
performing measurement for a neighboring cell with a second beam set, based on the measurement configuration;
transmitting, to the base station, a first measurement information and a second measurement information,
wherein the first measurement information includes i) a first measurement value measured by a User Equipment, UE, including the non-volatile computer readable storage medium for the serving cell and ii) information about the first beam,
wherein the second measurement information includes i) a second measurement value measured by the UE for the neighboring cell and ii) information about the second beam set.
